# Europäisches Patentamt
## European Patent Office
### Office européen des brevets

(11) Veröffentlichungsnummer: **0 067 452 B1**

(12) **EUROPÄISCHE PATENTSCHRIFT**

(45) Veröffentlichungstag der Patentschrift:
**17.09.86**

(21) Anmeldenummer: **82105286.7**

(22) Anmeldetag: **16.06.82**

(51) Int. Cl.⁴: **B 01 D 53/00**, D 06 F 43/08

---

(54) Vorrichtung zum Reinhalten der Umgebungsluft beim Entleeren und Reinigen der Destillierblase von Trockenreinigungsvorrichtungen.

---

(30) Priorität: **16.06.81 DE 3123792**

(43) Veröffentlichungstag der Anmeldung:
**22.12.82 Patentblatt 82/51**

(45) Bekanntmachung des Hinweises auf die Patenterteilung:
**17.09.86 Patentblatt 86/38**

(84) Benannte Vertragsstaaten:
**CH FR GB IT LI NL**

(56) Entgegenhaltungen:
**DE - A - 1 460 386**
**DE - A - 1 760 487**
**DE - A - 1 922 525**
**DE - A - 2 147 125**
**US - A - 3 065 619**

(73) Patentinhaber: **Multimatic Maschinen GmbH. & Co.,
Bismarckstrasse 4-10, D-4520 Melle (DE)**

(72) Erfinder: **Grandi, Vittorio, Via Provinciale, 19, I-40016 S.
Giorgio Di Piano Bologna (IT)**

(74) Vertreter: **Lorenz, Eduard et al, Rechtsanwälte Lorenz,
Eduard - Seidler, Bernhard Seidler, Margrit - Gossel,
Hans-K. Philipps, Ina, Dr. Widenmayerstrasse 23,
D-8000 München 22 (DE)**

---

## Beschreibung

Die Erfindung betrifft eine Vorrichtung zum Reinhalten der Umgebungsluft beim Entleeren und Reinigen der Destillierblase von Trockenreinigungsvorrichtungen.

Bei Trockenreinigungsvorrichtungen muss das Lösungsmittel, beispielsweise Perchloräthylen, in regelmässigen Abständen durch Destillation gereinigt werden, um die volle Reinigungskraft des Lösungsmittels wiederherzustellen und eine Verschmutzung der Garderobe durch das Lösungsmittel selbst zu verhindern. Wird nun die Destillierblase nach Beendigung des Destilliervorganges zur Entnahme der Destillationsrückstände geöffnet, lässt sich ein Austritt von Lösungsmitteldampf aus der Destillierblase mit allen nachteiligen Folgen für das Bedienungspersonal nicht verhindern. Häufig werden beim Ausräumen der Destillationsrückstände aus der Destillierblase die zulässigen MAK-Werte überschritten.

Aus der DE-OS 1 922 525 ist ein Verfahren zur Rückgewinnung von leicht flüchtigen Lösungsmittelresten aus den Filterrückständen in einem Destillierbehälter und/oder Filterkessel, insbesondere bei Chemisch-Reinigungsmaschinen, bekannt, bei welchem das Lösungsmittel aus dem Filter in den Destillierbehälter abgelassen und destilliert wird. Bei dem vorbekannten Verfahren wird nach dem Destillieren in dem Destillierbehälter ein Unterdruck erzeugt und das aus den Rückständen unter Unterdruck vergasende Lösungsmittel abgesaugt sowie einer Lösungsmittelrückgewinnungseinrichtung zugeführt. Dadurch können die in den Rückständen noch enthaltenen Lösungsmittelreste zurückgewonnen werden, bevor die Rückstände von aussen entnommen werden.

Die US-PS 3 065 619 offenbart eine Folgesteuerung für eine Trockenreinigungsvorrichtung, die die Entladetür der Waschtrommel erst entriegelt, wenn zuvor ein Lüfter eingeschaltet worden ist, der durch die Entladetür Umgebungsluft ansaugt und an anderer Stelle ins Freie abbläst.

Aufgabe der Erfindung ist es, eine Vorrichtung vorzuschlagen, mit der sich auch beim Ausräumen der Destillierblase einer Trockenreinigungsvorrichtung die Umgebungsluft von Lösungsmitteldampf reinhalten lässt.

Erfindungsgemäss wird diese Aufgabe gelöst durch die kennzeichnenden Merkmale des Patentanspruchs 1. Durch die Ansaugung der in der Destillierblase enthaltenen lösungsmitteldampfhaltigen Luft wird ein Austreten derselben in die Umgebungsluft verhindert. Nach dem Durchlaufen der Reinigungs- und/oder Rückgewinnungsanlage enthält die lösungsmitteldampfhaltige Luft aus der Destillierblase keinen Lösungsmitteldampf mehr und kann daher schadlos ins Freie abgeblasen werden.

Das erfindungsgemässe Verfahren lässt sich unter Verwendung üblicherweise bei Trockenreinigungsvorrichtungen bereits vorhandener Aggregate in einfacher Weise dadurch verwirklichen, dass der vorhandene Trocknungslüfter durch umsteuerbare Klappen oder Ventile an die Destillierblase angeschlossen wird und aus dieser die lösungsmitteldampfhaltige Luft ansaugt und über eine nachgeschaltete Reinigungs- und/ oder Rückgewinnungsanlage abbläst.

Die Destillierblase kann dabei unmittelbar an den Trocknungslüfter oder aber auch über den Luftkühler an den Trocknungslüfter angeschlossen sein, so dass bereits in diesem Lösungsmittel zurückgewonnen werden kann.

Die Ventile oder Klappen der die Destillierblase an den Trocknungslüfter anschliessenden Leitungen sowie die Ventile oder Klappen der den Trocknungslüfter mit der Rückgewinnungs- und/oder Reinigungsanlage verbindenden Leitung und der Antrieb des Trocknungslüfters werden durch einen Schalter betätigt, der mit der Verriegelung der Ausräumklappe oder mit dieser selbst betätigbar sein kann.

Ein Ausführungsbeispiel der Erfindung wird nachstehend anhand der Zeichnung näher erläutert. In dieser zeigt

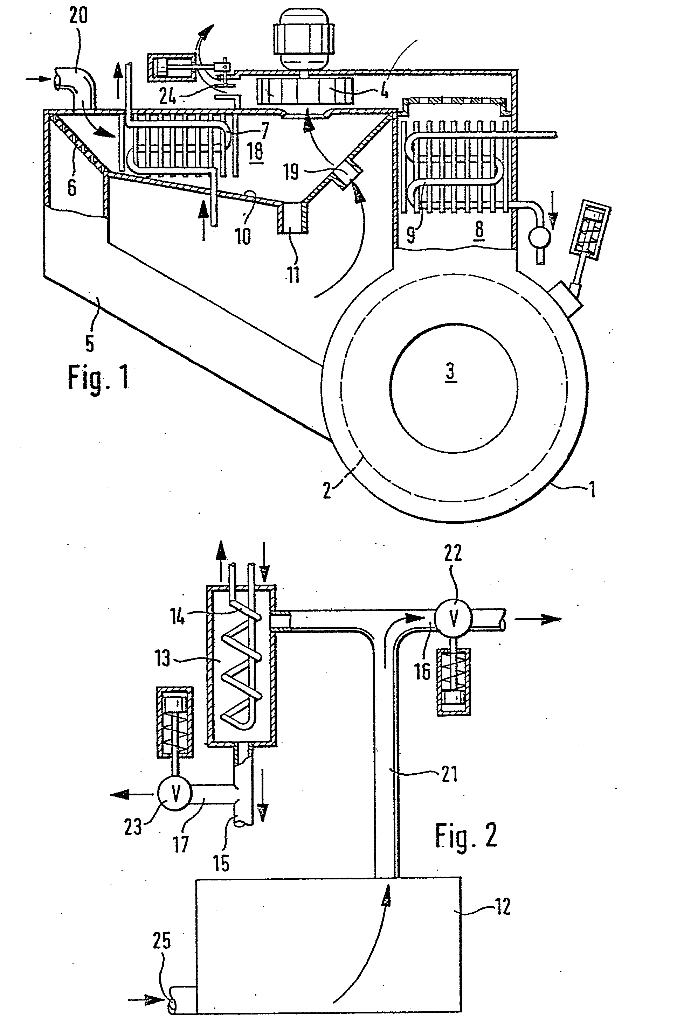

Fig. 1 den Trocknungskreislauf einer Trockenreinigungsvorrichtung in schematischer Darstellung und

Fig. 2 eine schematische Darstellung der Destillierblase für eine Trockenreinigungsvorrichtung nach Fig. 1.

In einem trommelförmigen Gehäuse 1 ist die gestrichelt angedeutete Waschtrommel 2 drehbar gelagert. In dieser Waschtrommel 2 wird die durch die verschliessbare Öffnung 3 einfüllbare und entnehmbare Garderobe nach Beendigung des Reinigungsvorgangs auch getrocknet.

Nach dem Ableiten des Lösungsmittels und dem Schleudern der Garderobe wird diese in einem Trocknungsluftstrom getrocknet. Dabei wird von dem Lüfter 4 durch die Ansaugleitung 5 Luft aus dem Gehäuse 1 angesaugt. Die angesaugte Trocknungsluft tritt über den Flusenfilter 6 in den Luftkühler 7 ein und wird sodann nach Durchtritt durch den Lüfter 4 über die Leitung 8, in der der Lufterhitzer 9 angeordnet ist, wieder in das Gehäuse 1 der Waschtrommel 2 ein.

In dem Luftkühler 7 auskondensiertes Lösungsmittel sammelt sich auf dem Boden 10 der trichterförmigen Auffangwanne und fliesst über den Stutzen 11 in den Wasserabscheider. Soweit ist die Trockenreinigungsvorrichtung bekannter Bauart.

Zum Zwecke der Reinigung des Lösungsmittels wird dieses in regelmässigen Abständen in die Destillierblase 12 gefüllt und durch Erhitzen wird das Lösungsmittel abdestilliert und beispielsweise in dem Kondensator 13, der mit Kühlschlangen 14 versehen ist, verflüssigt, so dass es über den Stutzen 15 zum Wasserabscheider und anschliessend in den Rein- oder Vorratstank zurückgelangt.

Erfindungsgemäss sind nun Leitungen 16 oder 17 vorgesehen, die unmittelbar über den Stutzen 19 in den Raum 18 unterhalb des Lüfters oder über den Stutzen 20 in den Luftkühler 7 münden. Die Leitung 16 ist unmittelbar mit der von der Destillierblase kommenden Leitung 21 verbunden, während die Leitung 17 hinter dem Kondensator 13 angeschlossen ist. In der Leitung 16 ist das steuerbare Ventil 22 und in der Leitung 17 das steuerbare Ventil 23 angeordnet.

Die Druckseite des Lüfters 4 ist über die steuerbare Klappe 24 mit einer zu einer Reinigungs- und/oder Rückgewinnungsanlage führenden Leitung verbunden.

Die Ventile und Klappen 22, 23, 24 sind durch Magnete oder hydraulische oder pneumatische Zylinder betätigbar.

Wird nun nach Beendigung des Destilliervorgangs die durch eine nicht dargestellte Tür oder Klappe verschlossene Ausräumöffnung 25 der Destillierblase geöffnet, wird automatisch der Lüfterantrieb eingeschaltet und die Ventile und Klappen 22, 23, 24 werden in der Weise geschaltet, dass durch die Öffnung 25 von dem Lüfter 4 lösungsmitteldampfhaltige Luft angesaugt und nach Passieren der Rückgewinnungs- und/oder Reinigungsanlage abgeblasen wird.

Die Ventile und der Antrieb können durch einen besonderen Schalter eingeschaltet werden, der zu seiner Betätigung mit der Verriegelung oder der Tür der Destillierblase verbunden sein kann.

## Patentansprüche

1. Vorrichtung zum Reinhalten der Umgebungsluft beim Entleeren und Reinigen der Destillierblase von Trockenreinigungsvorrichtungen, dadurch gekennzeichnet, dass die Destillierblase (12) während des Öffnens von deren Ausräumklappe über Leitungen (16, 17) und steuerbare Ventile (22, 23) mit einem Trocknungslüfter (4) verbunden ist, der die angesaugte lösungsmitteldampfhaltige Luft über eine Reinigungs- und/oder Rückgewinnungsanlage ins Freie abbläst und der beim Reinigungsprozess nach Ableiten des Lösungsmittels und nach dem Schleudern der Garderobe Luft aus der Waschtrommel (2) ansaugt und nach Kühlung und nachfolgender Erwärmung wieder in diese einleitet.

2. Vorrichtung nach Anspruch 1, dadurch gekennzeichnet, dass eine steuerbare Klappe (24) oder ein steuerbares Ventil zum Umschalten des Lüfters (4) auf die der Abluftleitung vorgeschaltete Reinigungs- und/oder Rückgewinnungsanlage vorgesehen ist.

3. Vorrichtung nach Anspruch 1 oder 2, dadurch gekennzeichnet, dass die Destillierblase (12) über steuerbare Ventile (22) direkt mit der Saugseite des Lüfters (4) verbunden ist.

4. Vorrichtung nach Anspruch 1 oder 2, dadurch gekennzeichnet, dass die die Destillierblase (12) mit dem Lüfter (4) verbindende und über steuerbare Ventile anschliessbare Leitung vor dem dem Lüfter (4) vorgeschalteten Luftkühler (7) mündet.

5. Vorrichtung nach einem der Ansprüche 1 bis 4, dadurch gekennzeichnet, dass die Umsteuerventile (22, 23) für die die Destillierblase (12) mittelbar über den Luftkühler (7) oder unmittelbar an den Lüfter (4) anschliessenden Leitungen (16, 17), die den Lüfter (4) mit der Reinigungs- und/oder Rückgewinnungsanlage verbindende Klappe (24) und der Lüfterantrieb durch einen Schalter betätigbar sind.

6. Vorrichtung nach Anspruch 5, dadurch gekennzeichnet, dass der Schalter durch die Verriegelung der Ausräumklappe der Destillierblase (12) betätigbar ist.

7. Vorrichtung nach Anspruch 5, dadurch gekennzeichnet, dass der Schalter durch das Öffnen und Schliessen der Ausräumklappe der Destillierblase (12) betätigbar ist.

## Claims

1. Apparatus for maintaining the ambient air in a pure condition during the emptying and cleaning of the still of drycleaning apparatus, characterized in that when the hinged plate for emptying the still (12) is open the still is connected by lines (16, 17) and controllable valves (22, 23) to a drying fan (4), by which the solvent-vapour-containing, sucked air is blown into the open through a purifying and/or recovering plant and which during the cleaning process, when the solvent has been drained and the clothes have been spin-dried, sucks air from the washing drum (2) and when the sucked air has been cooled and subsequently heated returns the sucked air to the washing drum.

2. Apparatus according to claim 1, characterized in that a controllable damper (24) or a controllable valve is provided for connecting the fan (4) to the purifying and/or recovering plant which precedes the exhaust air line.

3. Apparatus according to claim 1 or 2, characterized in that the still (12) is directly connected to the suction side of the fan (4) by means of controllable valves (22).

4. Apparatus according to claim 1 or 2, characterized in that the line which connects the still (12) to the fan (4) and which is adapted to be connected by controllable valves opens upstream of the air cooler (7) which precedes the fan (4).

5. Apparatus according to any of claims 1 to 4, characterized in that the directional control valves (22, 23) for connecting the still (12) indirectly via the air cooler (7) or directly to the lines (16, 17) connected to the fan (4), the damper (24) connecting the fan (4) to the purifying and/or recovering plant, and the fan drive are operable by a switch.

6. Apparatus according to claim 5, characterized in that the switch is operable by the means for locking the hinged plate for emptying the still (12).

7. Apparatus according to claim 5, characterized in that the switch is operable in that the hinged plate for emptying the still (12) is opened and closed.

## Revendications

1. Dispositif de maintien de la pureté de l'air ambiant lors du vidage et du nettoyage de la cornue d'installations de nettoyage à sec caractérisé en ce que la cornue (12) est raccordée, pendant l'ouverture de son clapet de vidage, au moyen de conduites (16, 17) et de valves réglables (22, 23) à une soufflante de séchage (4) qui évacue à l'air libre l'air aspiré contenant des vapeurs de solvant à travers une installation de nettoyage et/ou de récupération et qui, pendant le processus de nettoyage et après que le solvant ait été dérivé et que les vêtements aient été essorés, aspire l'air du tambour de nettoyage (2) et ramène cet air au tambour de nettoyage après le refroidissement d'air et son réchauffement successif.

2. Dispositif selon la revendication 1 caractérisé en ce qu'un clapet (24) ou une valve réglables sont prévus pour brancher la soufflante (4) sur l'installation de nettoyage et/ou de récupération placée en amont de la conduite d'air d'échappement.

3. Dispositif selon la revendication 1 ou 2 caractérisé en ce que la cornue (12) est raccordée directement au côté aspiration de la soufflante (4) au moyen de valves (22) réglables.

4. Dispositif selon la revendication 1 ou 2 caractérisé en ce que la conduite qui raccorde la cornue (12) à la soufflante (4) et qui est adaptée pour être raccordée par des valves réglables, débouche dans le dispositif de refroidissement de l'air (7) placé en amont de la soufflante (4).

5. Dispositif selon l'une des revendications 1 à 4 caractérisé en ce que les valves d'inversion (22, 23) servant au raccordement indirect de la cornue (12) par l'intermédiaire du dispositif de refroidissement de l'air (7) ou au raccordement direct aux conduites (16, 17) raccordées à la soufflante (4), le clapet (24) raccordant la soufflante (4) avec l'installation de nettoyage et/ou de récupération et l'entraînement de la soufflante peuvent être actionnés par un interrupteur.

6. Dispositif selon la revendication 5 caractérisé en ce que l'interrupteur peut être actionné par le verrouillage du clapet de vidage de la cornue (12).

7. Dispositif selon la revendication 5 caractérisé en ce que l'interrupteur peut être actionné par l'ouverture et la fermeture du clapet de vidage de la cornue (12).

Fig. 1

Fig. 2